# DEMANDE DE BREVET EUROPEEN

(11) **EP 4 851 040 A1**
(43) Date de publication de la demande: **09.12.2026**
(21) Numéro de dépôt: 26157942.9
(22) Date de dépôt: 11.02.2026
(51) Int. Cl.: B64C 27/12, F16D 41/00

(54) **BOITIER INSTRUMENTE COMPRENANT UNE ROUE LIBRE**

(30) Priorité: 06.06.2025 FR 2506175
(71) Demandeur: Airbus Helicopters, 13725 Marignane Cedex (FR)
(72) Inventeur: CERQUEIRA, Stéphane, 13510 EGUILLES (FR); BARAIS, Olivier, 13820 ENSUES LA REDONNE (FR)
(74) Mandataire: GPI Brevets

(57) **Abrégé**

La présente invention concerne un boîtier instrumenté (10) comprenant un carter (20) et une roue libre (30), la roue libre (30) comprenant une partie menante (31) et une partie menée (35) agencées au moins dans un volume interne (INT) délimité par ledit carter (20), ledit boîtier instrumenté (10) comprenant au moins un circuit de lubrification (40) pour lubrifier ladite roue libre (30) dans le carter (20), ledit boîtier instrumenté (10) comprenant au moins un senseur (60) pour surveiller le fonctionnement de la roue libre (30).

## Description

La présente invention concerne un boîtier instrumenté comprenant une roue libre. En particulier, un tel boîtier peut être agencé au sein d'une installation motrice, voire en particulier au sein d'une installation motrice agencée sur un aéronef afin de mettre en mouvement un rotor.

Une roue libre est usuellement munie d'une partie menante, d'une partie menée, et d'au moins un organe de liaison en rotation.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas un couple moteur à la partie menée et inversement. La partie menée et la partie menante sont désolidarisées en rotation autour de l'axe de rotation.

En revanche, dans un mode de fonctionnement dénommé « synchronisé » ou « engagé » par commodité, la partie menante et la partie menée tournent à la même vitesse et conjointement autour de l'axe de rotation. La partie menante transmet un couple moteur à la partie menée via le ou les organes de liaison.

Selon un exemple, une roue libre à rouleaux peut comporter une partie menante ayant une partie périphérique munie de rampes. Chaque rampe est inclinée par rapport à une direction tangente à un cercle centré sur l'axe de rotation. Cette partie périphérique munie de rampes est parfois dénommée « roue à rampes ». A l'inverse, la partie menée comporte un moyeu disposé autour de la partie menante, ce moyeu comportant un anneau ayant une face cylindrique au regard des rampes. Par suite, des organes de liaison de type rouleaux sont portés par une cage et sont disposés dans l'espace séparant radialement les rampes et la face cylindrique. Durant le mode de fonctionnement désengagé, les rouleaux sont chacun disposés au pied d'une rampe et ne lient pas en rotation la partie menante et la partie menée. Lors du passage vers le mode de fonctionnement synchronisé, les rouleaux sont déplacés vers le sommet des rampes et se coincent temporairement entre les rampes et la face cylindrique. La partie menante entraîne alors en rotation la partie menée via les rouleaux.

Cette réalisation comporte alors un arbre interne menant muni de la roue à rampes et d'un anneau mené ayant une face cylindrique agencée autour de l'arbre interne menant.

Alternativement, une roue libre peut comprendre un anneau menant à rampes entourant un arbre mené ayant une face cylindrique. Par exemple, une roue libre à osselets peut comprendre une partie menante entourant partiellement une partie menée.

D'autres types de roue libre comportent au moins un cliquet ou un dispositif à osselets par exemple.

Au sein d'une installation motrice d'un giravion, la partie menante d'une roue libre peut être mise en mouvement directement ou indirectement par un moteur, alors que la partie menée de la roue libre peut être reliée cinématiquement à un rotor. La roue libre peut être agencée au sein du moteur, ou au sein d'une boîte de transmission de puissance, voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre.

Une telle roue libre a pour fonction de permettre l'entraînement du rotor par le moteur et d'interdire a contrario l'entraînement du moteur par la chaîne mécanique de puissance, voire le blocage du rotor en cas de blocage du moteur. La roue libre peut notamment présenter un intérêt durant une phase d'autorotation de la voilure tournante par exemple.

En particulier, le document US 2021/0094698 A1 présente une roue libre débrayable connectée à un moteur.

Par ailleurs, une installation motrice de giravion peut comprendre plusieurs moteurs à combustion, dits aussi plus simplement « moteurs ».

Sur un giravion conventionnel, une installation motrice multimoteur fonctionne, hors cas de panne, selon un mode de fonctionnement coopératif durant lequel les moteurs génèrent chacun une puissance motrice contribuant conjointement à mettre en mouvement le rotor.

En revanche, une installation motrice peut éventuellement fonctionner selon un mode de fonctionnement asymétrique en mettant en veille au moins un des moteurs. Sur un giravion bimoteur, lors du mode de fonctionnement asymétrique, un moteur actif est régulé pour assurer la mise en rotation d'un rotor en transmettant au rotor, avec son arbre de puissance, une puissance motrice non nulle. Un moteur passif est en revanche en veille afin de ne pas transmettre une puissance motrice au rotor.

Un moteur en veille peut être arrêté en ayant une chambre de combustion éteinte. La chambre de combustion du moteur passif n'est alors plus alimentée en carburant, et sur un turbomoteur, les organes tournants du générateur de gaz peuvent être ou ne pas être mis en mouvement par une machine électrique. Alternativement, un moteur en veille peut fonctionner à un régime de ralenti ou de super-ralenti, en ayant une chambre de combustion allumée et alimentée en carburant, le moteur en veille fonctionnant à très faible vitesse de rotation et ne transmettant alors aucune puissance à la voilure tournante, le ou les moteurs actifs assurant l'intégralité de la fourniture de puissance. Par exemple, le moteur passif est dans un régime de ralenti en ayant une vitesse de rotation de l'ordre de 40% de sa vitesse nominale.

Dès lors, lorsque le mode de fonctionnement asymétrique est mis en œuvre, la roue libre reliée au moteur en veille est dans le mode désengagé. Par suite, cette roue libre est susceptible de rester dans le mode désengagé pendant une durée prolongée lors d'une mission.

De plus, la mise en œuvre du mode de fonctionnement asymétrique peut induire de nombreuses mises en veille d'un moteur engendrant de nombreux passages du mode de fonctionnement collaboratif au mode de fonctionnement asymétrique, et inversement de nombreuses réactivations d'un moteur en veille engendrent de nombreux passages du mode de fonctionnement asymétrique au mode de fonctionnement collaboratif. La réactivation d'un moteur en veille peut en particulier être réalisée rapidement, un tel démarrage rapide pouvant engendrer sur la roue libre des contraintes plus importantes que lors d'un démarrage conventionnel. La mise en œuvre du mode de fonctionnement asymétrique peut alors générer un endommagement accéléré de la roue libre associée en raison des nombreux changements de modes de fonctionnement, au regard d'une roue libre agencée sur un aéronef ne mettant pas en œuvre le mode de fonctionnement asymétrique.

En outre, sur un giravion multimoteur, les roues libres sont usuellement identiques, et ne font pas l'objet d'opérations de maintenance personnalisées. Or, les roues libres peuvent subir une usure dissymétrique sur un aéronef mettant en œuvre le mode de fonctionnement asymétrique, en fonction notamment des cycles de fonctionnement en veille des moteurs associés.

Les documents CN 115 771 614 A, JP 2014 173547 A, et CN 111 795 082 A sont par ailleurs connus.

La présente invention a alors pour objet de proposer un boîtier de roue libre innovant dit plus simplement « boîtier instrumenté » par la suite, pour notamment prendre en considération l'usure spécifique d'une roue libre au sein d'une installation motrice multimoteur d'un aéronef pouvant mettre en œuvre un mode de fonctionnement asymétrique.

La présente invention concerne ainsi un boîtier instrumenté. Ce boîtier instrumenté comporte un carter et une roue libre, la roue libre comprenant une partie menante et une partie menée agencées au moins dans un volume interne délimité par ledit carter, ledit boîtier instrumenté comprenant au moins un circuit de lubrification lubrifiant ladite roue libre dans le carter, ledit boîtier instrumenté comprenant au moins un senseur surveillant le fonctionnement de la roue libre.

La roue libre peut en outre comporter au moins un dispositif de liaison pour désolidariser la partie menante et la partie menée durant un mode désengagé lorsque la partie menée a une vitesse de rotation supérieure à une vitesse de rotation de la partie menante, et pour lier la partie menante et la partie menée durant un mode engagé lorsque la partie menante transmet un couple à la partie menée en tendant à tourner plus vite que la partie menée. Ce dispositif de liaison est agencé dans le volume interne délimité par le carter. La roue libre peut à cet effet prendre la forme d'une roue libre à osselets, d'une roue libre à rampes du type décrit précédemment, d'une roue libre à cliquets, ou autres. La partie menée peut être située au moins partiellement dans la partie menante, ou la partie menante peut être située au moins partiellement dans la partie menée.

Le boîtier instrumenté représente un module muni uniquement d'une roue libre et de moyens visant à assurer le fonctionnement et la surveillance du fonctionnement de cette roue libre. Un tel boîtier instrumenté peut ainsi être agencé à la place d'une roue libre classique, par exemple au sein d'une installation motrice possiblement multimoteur.

L'agencement d'une roue libre au sein d'un carter peut permettre d'obtenir un équipement à part entière pouvant être aisément retiré, voire remplacé. Le carter du boîtier instrumenté est ainsi indépendant, à savoir déplaçable par un opérateur, favorablement sans démontage d'un moteur ou d'une boîte de transmission de puissance par exemple. Le boîtier instrumenté peut si besoin être déconnecté, ce qui permet d'avoir un accès direct et aisé à la roue libre par la suite sans démontage d'un moteur ou d'une boîte de transmission de puissance coopérant avec le boitier instrumenté par exemple. Un tel boîtier instrumenté peut ainsi faciliter une opération de maintenance.

Alternativement, le carter peut comprendre au moins une paroi formant un ensemble monobloc avec un autre organe, par exemple avec une enveloppe d'un moteur ou d'une boite de transmission de puissance, et un couvercle démontable pour avoir accès à la roue libre.

Le boîtier instrumenté permet, en outre, de lubrifier et/ou de refroidir correctement la roue libre, voire des paliers, à l'aide du circuit de lubrification. Le circuit de lubrification peut à cet effet être connecté à un système de lubrification conventionnel, et éventuellement à un système de lubrification dédié ou partagé avec d'autres équipements. Le boîtier instrumenté peut comprendre des joints dynamiques pour compartimenter la lubrification. Le circuit de lubrification peut être optimisé pour limiter la traînée de la roue libre (à savoir son couple résiduel) en condition désengagée, par exemple via des cheminements spécifiques voire une gestion du niveau des piscines de rétention du liquide centrifugé dans les parties tournantes.

En outre, le boîtier instrumenté est muni d'un ou de plusieurs senseurs permettant d'effectuer une surveillance optimisée voire dédiée du fonctionnement de la roue libre pour détecter une usure ou un dysfonctionnement par exemple. Cette surveillance peut éventuellement permettre de surveiller le fonctionnement du moteur associé, par exemple en surveillant le passage de la roue libre du mode désengagé au mode engagé à la suite de la réactivation d'un moteur en veille. Un calculateur peut détecter un dysfonctionnement du moteur en veille si la roue libre ne passe du mode désengagé au mode engagé à la suite de la réactivation de ce moteur en veille.

La surveillance peut aussi permettre d'autoriser ou d'imposer une sortie du mode de fonctionnement asymétrique décrit précédemment. Par exemple, la ou les valeurs mesurées par un ou des senseurs du boîtier instrumenté peuvent être transmises au système avionique de l'aéronef, et par exemple à un contrôleur qui applique des instructions pour autoriser ou interdire la mise en œuvre du mode asymétrique sur un aéronef multimoteur et/ou pour imposer une sortie du mode asymétrique en fonction de cette ou ces valeurs. Un tel contrôleur peut par exemple prendre la forme d'un calculateur moteur pilotant un des moteurs et/ou d'un calculateur en communication avec les calculateurs moteurs.

Selon un autre aspect, l'invention permet éventuellement de remplacer en tout ou partie un premier boîtier instrumenté muni d'une première roue libre par un deuxième boîtier instrumenté muni d'une deuxième roue libre différente de la première roue libre. Ainsi, un opérateur peut utiliser le boîtier instrumenté correspondant au besoin. Par exemple, le premier boîtier instrumenté peut être dimensionné pour un aéronef ne mettant pas en œuvre le mode de fonctionnement asymétrique décrit précédemment, et le deuxième boîtier instrumenté peut être dimensionné pour un moteur susceptible d'être en veille lors de l'application du mode de fonctionnement asymétrique. Eventuellement, le premier boîtier instrumenté et le deuxième boîtier instrumenté peuvent par exemple avoir un même carter.

Le boîtier instrumenté peut de plus comporter une ou plusieurs des caractéristiques qui suivent, prises seules ou en combinaison.

Selon une possibilité, le circuit de lubrification peut comprendre au moins un premier connecteur et un deuxième connecteur solidaires du carter pour permettre une entrée d'un fluide dans le boitier instrumenté et une sortie du fluide en dehors du boîtier instrumenté.

Le premier connecteur peut être connecté à un système de lubrification pour recevoir le fluide permettant de lubrifier et/ou de refroidir notamment la roue libre. Le deuxième connecteur peut en outre être connecté à ce circuit de lubrification pour évacuer ce fluide en dehors du boîter instrumenté. Le premier connecteur et le deuxième connecteur peuvent être d'un type usuel, voire peuvent comprendre un passage ménagé dans le carter.

Le premier connecteur et/ou le deuxième connecteur peuvent être auto-obturants, à savoir antifuite suite à un démontage.

Selon une possibilité compatible avec les précédentes, le circuit de lubrification peut comporter une ligne de lubrification ménagée dans le carter, la ligne de lubrification étant en communication fluidique avec ledit au moins un premier connecteur.

La ligne de lubrification peut comprendre au moins une canalisation ménagée dans au moins une paroi du carter, propre au carter ou partagé avec un autre organe selon la variante, au moins un tuyau, etc. La ligne de lubrification peut déboucher sur au moins un asperseur. Un tel asperseur peut comprendre un simple orifice du carter débouchant sur le volume interne du boîtier instrumenté, un gicleur ou autres. Une telle ligne de lubrification permet de diriger un fluide de lubrification et/ou de refroidissement précisément vers une zone à lubrifier et/ou à refroidir.

Selon une possibilité compatible avec les précédentes, ledit carter peut comporter au moins un port endoscopique.

Un tel port endoscopique permet de faire passer un endoscope au travers du carter pour effectuer une inspection visuelle périodique de la roue libre. Un tel port endoscopique peut comporter un passage formé dans le carter, ce passage débouchant sur le volume interne et un milieu extérieur. Le port endoscopique peut comporter un obturateur pour obturer ce passage de manière usuelle en dehors d'une telle inspection visuelle.

Selon une possibilité compatible avec les précédentes, ledit carter peut comporter une première interface de fixation configurée pour être fixée à un premier dispositif ayant un premier organe connecté à la partie menante et une deuxième interface de fixation configurée pour être fixée à un deuxième dispositif ayant un deuxième organe connecté à la partie menée.

La première interface de fixation et la deuxième interface de fixation permettent d'agencer aisément le boîtier instrumenté au sein d'une chaine de transmission de puissance entre deux dispositifs.

Selon une possibilité compatible avec les précédentes, ladite partie menante et ladite partie menée peuvent s'étendre chacune partiellement en dehors du carter.

Cette caractéristique peut faciliter la connexion de la roue libre à des arbres d'une chaine de transmission de puissance.

Eventuellement, le boîtier instrumenté peut comporter des joints dynamiques autour de la partie menante et de la partie menée.

Selon une possibilité compatible avec les précédentes, ledit boîtier instrumenté peut comporter au moins un palier dans ledit volume interne entre le carter et la partie menante ou la partie menée.

Le ou les paliers permettent de guider la partie menante et la partie menée.

Selon un exemple, un tronçon mené de la partie menée entoure localement un tronçon menant de la partie menante dans le carter, deux paliers s'étendant entre le tronçon mené et le carter et deux paliers s'étendant entre le tronçon menant et le tronçon mené.

Alternativement, un tronçon menant de la partie menante entoure localement un tronçon mené de la partie menée dans le carter, deux paliers s'étendant entre le tronçon menant et le carter et deux paliers s'étendant entre le tronçon menant et le tronçon mené.

Selon une possibilité compatible avec les précédentes ledit au moins un senseur peut comporter un ou plusieurs des senseurs suivants : un accéléromètre agencé sur le carter, un senseur de température agencé sur le carter, un senseur de pression mesurant une pression d'un fluide au sein du circuit de lubrification, un senseur de température mesurant une température du fluide au sein du circuit de lubrification, un bouchon magnétique agencé sur le carter, un interrupteur thermique.

Eventuellement, le boîtier instrumenté comporte au moins un accéléromètre agencé sur le carter, et au moins un senseur de température agencé sur le carter, et au moins un senseur de pression mesurant une pression du fluide au sein du circuit de lubrification, et au moins un senseur de température mesurant une température du fluide au sein du circuit de lubrification, et au moins un bouchon magnétique agencé sur le carter, et au moins un interrupteur thermique.

Le boîtier instrumenté est muni d'un carter, éventuellement dédié, sujet à des vibrations provoquées par ses propres composants. Dès lors, les accélérations mesurées avec un ou des accéléromètres reflètent le fonctionnement de ce boîtier instrumenté. La signature vibratoire, mesurée avec un ou des accéléromètres, associée à une logique de contrôle spécifique mémorisée dans un calculateur permettent de surveiller le boîtier instrumenté, et en particulier sa roue libre.

Par exemple, un écaillage d'un composant de la roue libre peut générer une augmentation continue des vibrations mesurées, et peut ainsi être détecté par un calculateur si la mesure de l'amplitude des vibrations obtenue à l'aide d'un ou de plusieurs accéléromètres augmente continument. Dans ce cas, le calculateur peut générer un signal transmis à un alerteur pour signaler l'écaillage.

De même, le ou les accéléromètres peuvent permettre de détecter des chocs anormaux lors du passage du mode engagé au mode désengagé, et inversement, par exemple via la variation de l'amplitude du choc généré par rapport à une référence mesurée avec une roue libre de référence saine. Un tel choc anormal peut ainsi être détecté par un calculateur si l'amplitude d'un signal de mesure dépasse un seuil, et reflète une défaillance de la roue libre ou dans la régulation du moteur associé. Dans ce cas, le calculateur peut générer un signal transmis à un alerteur pour signaler le choc détecté.

Eventuellement, le ou les accéléromètres peuvent permettre de détecter des pics ponctuels anormaux dans les mesures effectuées durant le mode engagé, ces pics pouvant résulter d'à-coups ou d'un glissement de la roue libre. De même, le ou les accéléromètres peuvent permettre de détecter des pics ponctuels anormaux dans les mesures effectuées durant le mode désengagé, ces pics pouvant résulter d'une lubrification défectueuse ou de l'usure par exemple. Un calculateur peut alors analyser le ou les signaux de mesure générés par le ou les accéléromètres pour détecter de tels pics et générer une alerte. Dans ce cas, le calculateur peut générer un signal transmis à un alerteur pour signaler le dysfonctionnement.

Selon un autre aspect, un senseur de pression mesurant une pression du fluide au sein du circuit de lubrification peut permettre de détecter une perte de lubrification partielle en présence d'une pression supérieure à un seuil, par exemple due au colmatage d'un asperseur, qui n'est habituellement pas détectée, ce qui peut éviter une panne dormante. Dans ce cas, le calculateur peut générer un signal transmis à un alerteur pour signaler le dysfonctionnement.

Selon un autre aspect, un senseur de température agencé sur le carter permet de mesurer la température de la peau du carter, par exemple pour détecter un échauffement spécifique d'un palier de guidage en rotation, tel un roulement à billes, situé à proximité du senseur en présence d'une température de peau supérieure à un seuil. Dans ce cas, le calculateur peut générer un signal transmis à un alerteur pour signaler l'échauffement.

Selon un autre aspect, un senseur de température mesurant une température au sein du circuit de lubrification peut permettre de détecter un éventuel échauffement du fluide de lubrification, en présence d'une température de fluide supérieure à un seuil, lié à une dégradation ou à un problème de lubrification si corroboré par la surveillance de la pression d'huile. Dans ce cas, le calculateur peut générer un signal transmis à un alerteur pour signaler l'échauffement.

Selon un autre aspect, un port d'accès avec un bouchon magnétique permet de capter de la limaille en suspension dans le fluide de lubrification résultant de l'usure de la roue libre ou d'un palier de guidage en rotation.

Par ailleurs, une installation motrice peut comprendre au moins un moteur pour mettre en mouvement un système mécanique. Cette installation motrice peut comporter au moins un boîtier instrumenté selon l'invention pour transmettre une puissance générée par ledit au moins un moteur.

Par exemple,
- ladite partie menante du boîtier instrumenté est connectée à un arbre moteur dudit au moins un moteur et ladite partie menée du boîtier instrumenté est connectée à une liaison mécanique qui est connectée à une boîte de transmission de puissance, ou
- ladite partie menante du boîtier instrumenté est connectée à une liaison mécanique qui est connectée à un arbre moteur dudit au moins un moteur et ladite partie menée du boîtier instrumenté est connectée à une entrée d'une boîte de transmission de puissance, ou
- un arbre moteur dudit au moins un moteur est connecté à une liaison mécanique qui est connectée à une boîte de transmission de puissance, ledit boîtier instrumenté étant logé de manière amovible dans la boîte de transmission de puissance.

Eventuellement, l'installation motrice peut comprendre au moins deux moteurs et un dit boîtier instrumenté par moteur, les au moins deux moteurs étant configurés pour fonctionner sur requête selon un mode de fonctionnement collaboratif durant lequel les deux moteurs développent chacun une puissance motrice et un mode de fonctionnement asymétrique durant lequel au moins un moteur est actif en développant une puissance motrice et au moins un moteur est en veille en ne transmettant pas une puissance motrice.

Les deux boîtiers instrumentés peuvent être différents, notamment si une logique met toujours en veille le même moteur durant le mode fonctionnement asymétrique.

Par ailleurs, un giravion peut comprendre une installation motrice selon l'invention comprenant au moins un moteur pour mettre en mouvement un rotor.

L'invention et ses avantages apparaîtront avec plus de détails dans le cadre de la description qui suit avec des exemples donnés à titre illustratif en référence aux figures annexées qui représentent :
la figure 1, un schéma présentant un boîtier instrumenté selon l'invention au sein d'une installation motrice d'un giravion,
la figure 2, un schéma présentant un boîtier instrumenté selon l'invention entre un moteur et une liaison mécanique,
la figure 3, un schéma présentant un boîtier instrumenté selon l'invention entre une boîte de transmission de puissance et une liaison mécanique, et
la figure 4, un schéma présentant un boîtier instrumenté selon l'invention dans une boîte de transmission de puissance.

Les éléments présents dans plusieurs figures distinctes sont affectés d'une seule et même référence.

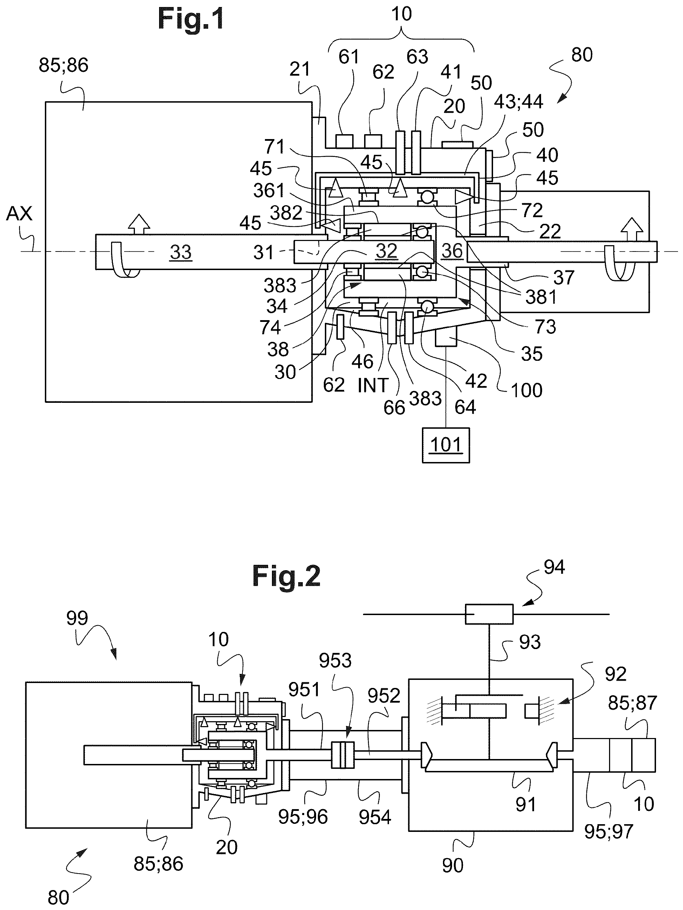

La figure 1 présente un boîtier instrumenté 10 selon l'invention.

Le boîtier instrumenté 10 comprend un carter 20 délimitant un volume interne INT. A cet effet, le carter 20 peut comprendre une ou des parois formant une enceinte. Une des parois peut former un couvercle démontable pour accéder à la roue libre. Au moins une paroi peut faire partie intégrante d'un autre équipement, ou le carter est dédié au boîtier instrumenté 10.

De plus, le boîtier instrumenté 10 comprend une roue libre 30 logée au moins partiellement dans le carter 20. La roue libre 30 comprend une partie menante 31 et une partie menée 35. La partie menante 31 comporte un ou plusieurs éléments solidaires en rotation autour d'un axe de rotation AX, et la partie menée 35 comporte aussi un ou plusieurs éléments solidaires en rotation autour de l'axe de rotation AX.

La partie menante 31 et la partie menée 35 sont en outre logées au moins partiellement dans le carter 20. Par exemple, la partie menante 31 comporte un premier tronçon menant 32 disposé dans le volume interne INT et un deuxième tronçon menant 33 qui sort du carter 20, ces tronçons pouvant former une pièce monobloc ou des pièces solidarisées l'une à l'autre. De même, la partie menée 35 peut comporter un premier tronçon mené 36 disposé dans le volume interne INT et un deuxième tronçon mené 37 qui sort du carter 20, ces tronçons pouvant former une pièce monobloc ou des pièces solidarisées l'une à l'autre. En outre, La partie menante 31 peut être située au moins partiellement dans la partie menée 35 selon l'exemple de la figure 1, ou la partie menée 35 peut être située au moins partiellement dans la partie menante 31.

Par ailleurs, de manière usuelle la roue libre 30 comporte au moins un dispositif de liaison 38 pour désolidariser la partie menante 31 et la partie menée 35 durant un mode désengagé lorsque la partie menée 35 a une vitesse de rotation supérieure à une vitesse de rotation de la partie menante 31, et pour lier la partie menante 31 et la partie menée 35 durant un mode engagé dans le cas contraire. Le dispositif de liaison 38 peut comprendre un dispositif à osselets, ou des rampes et des rouleaux, un système à cliquets, ou autres. Selon l'exemple illustré, le premier tronçon menant 32 comporte des rampes 381 et le premier tronçon mené 36 comporte une face cylindrique 382 en vis-à-vis des rampes 381, le ou les dispositifs de liaison 38 comportant des rouleaux 383 par exemple.

Eventuellement, le boîtier instrumenté 10 peut comporter au moins un palier 71, 72, 73, 74 dans ledit volume interne INT pour guider la roue libre 30 en rotation autour de l'axe de rotation AX.

Ainsi, au moins un voire deux paliers externes 71, 72 peuvent guider la partie menante 31 ou la partie menée 35 par rapport au carter 10. Eventuellement, au moins un voire deux paliers internes 73, 74 peuvent guider la partie menante 31 par rapport à la partie menée 35. Par exemple, les paliers 71, 72, 73, 74 peuvent comprendre des roulements à billes ou à rouleaux.

Selon l'exemple illustré, une extrémité menante 321 du premier tronçon menant 32 est partiellement logée dans une extrémité menée 361 du premier tronçon menée 36, le ou les dispositifs de liaison 38 coopérant avec l'extrémité menante 321 et l'extrémité menée 361. Dès lors, deux paliers 71, 72 sont disposés autour de l'extrémité menée 361 entre cette extrémité menée 361 et le carter 20, et deux paliers 73, 74 sont disposés autour de l'extrémité menante 321 entre cette extrémité menante 361 et l'extrémité menée 321. L'inverse est aussi possible.

Par ailleurs, le boîtier instrumenté 10 comprend au moins un circuit de lubrification 40 pour lubrifier la roue libre 30 dans le carter 20, voire par exemple le ou les dispositifs de liaison 38 et/ou les paliers 71, 72, 73, 74.

Ce circuit de lubrification 40 comprend au moins un premier connecteur 41 et un deuxième connecteur 42 solidaires du carter 20. Le premier connecteur 41 et le deuxième connecteur 42 peuvent comprendre des connecteurs usuels, éventuellement auto-obturants, pour être connectés hydrauliquement à un système de lubrification situé en dehors du carter 20, et non représenté. Ainsi, le premier connecteur 41 permet de recevoir un fluide 46 de lubrification afin de le distribuer dans le boîtier instrumenté 10, et le deuxième connecteur 42 permet de faire sortir ce fluide 46 du boîtier instrumenté 10. Eventuellement, un fond du carter 20 peut former une cuvette dans laquelle le fluide 46 peut tomber par gravité en utilisation, le deuxième connecteur 42 étant en communication avec cette cuvette.

Le circuit de lubrification 40 peut en outre comporter une ligne de lubrification 43 ménagée dans le carter 20. Cette ligne de lubrification 43 est en communication fluidique avec ledit au moins un premier connecteur 41. Par exemple, la ligne de lubrification 43 comporte au moins une canalisation ou un tuyau 44 débouchant sur au moins un asperseur 45. Selon l'exemple illustré, une canalisation est ménagée dans des parois du carter 20 et s'étend d'un premier connecteur 41 jusqu'à plusieurs asperseurs 45 afin de lubrifier les divers paliers 71, 72, 73, 74 et le ou les dispositifs de liaison 38.

Par ailleurs, le boîtier instrumenté 10 peut comprendre au moins un senseur 60 pour surveiller le fonctionnement de la roue libre 30.

Par « senseur », on entend ici un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Chaque senseur 60 peut être en liaison avec un calculateur 100, par exemple porté par le carter 20 ou déporté en dehors du carter 20. Le calculateur 100 peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur, etc. Le calculateur 100 peut de plus communiquer, via une liaison filaire ou non filaire, avec un alerteur 101, fixé au carter 20 ou déporté. Un tel alerteur 101 peut comprendre un système générant une ou des alertes audibles, un système haptique, un afficheur générant un ou des alertes textuels ou visuels.

En particulier, au moins un senseur 60 peut être un accéléromètre 61 agencé sur le carter 20. Le calculateur 100 peut alors être configuré pour générer un signal transmis à l'alerteur 101, par exemple quand une amplitude d'un signal mesurée avec un accéléromètre 61 dépasse un seuil mémorisé, et/ou si un gradient de cette amplitude dépasse un seuil mémorisé.

Eventuellement, au moins un senseur 60 peut être un senseur de température 62 agencé sur le carter 20. Par exemple un tel senseur de température 62 comporte un thermocouple, une thermistance, un détecteur de température à résistance, un capteur infrarouge ou tout autre système permettant de mesurer une température. Le calculateur 100 peut alors être configuré pour générer un signal transmis à l'alerteur 101 quand une température mesurée avec le senseur de température 82 dépasse un seuil de température de peau mémorisé.

Eventuellement, au moins un senseur 60 peut être un senseur de pression 63 mesurant une pression au sein du circuit de lubrification 40. Par exemple, un tel senseur de pression 63 comporte un capteur piézoélectrique, un capteur capacitif, une jauge de contrainte, un capteur piézorésistif. Le calculateur 100 peut alors être configuré pour générer un signal transmis à l'alerteur 101 quand une pression mesurée avec le senseur de pression 83 dépasse un seuil de pression mémorisé.

Eventuellement, au moins un senseur 60 peut être un senseur de température 64 mesurant une température au sein du circuit de lubrification 40, tel qu'un des senseurs de température décrits précédemment. Le calculateur 100 peut alors être configuré pour générer un signal transmis à l'alerteur 101 quand une température mesurée avec le senseur de température 82 dépasse un seuil de température de lubrification mémorisé.

Eventuellement, au moins un senseur 60 peut être un interrupteur thermique 65 qui génère un signal de mesure à partir d'une température limite. Le calculateur 100 peut alors être configuré pour générer un signal transmis à l'alerteur 101 quand l'interrupteur thermique 65 émet le signal de mesure.

Eventuellement, au moins un senseur 60 peut être un bouchon magnétique 66 agencé sur le carter 20, par exemple au niveau du fond du carter 20 pour capter une éventuelle limaille en suspension dans le fluide de lubrification résultant d'une usure de la roue libre 30 et/ou des paliers 71, 72, 73, 74.

Selon un autre aspect, le carter 20 peut comporter au moins un port endoscopique 50.

Par ailleurs, le carter 20 peut comporter une première interface de fixation 21 pour être fixé à un premier dispositif ayant un premier organe connecté à la partie menante 31, par exemple un moteur, et une deuxième interface de fixation 22 pour être fixé à un deuxième dispositif ayant un deuxième organe connecté à la partie menée 35, par une liaison mécanique. Eventuellement, chaque interface de fixation 21,22 peut comprendre une paroi du carter 20 percée pour être assemblée par vissage au premier dispositif ou au deuxième dispositif.

Alternativement, au moins une paroi du carter peut être une partie du premier ou deuxième dispositif.

En référence à la figure 2, au moins un boîtier instrumenté 10 peut être agencé au sein d'une installation motrice 80.

Une telle installation motrice 80 comprend au moins un moteur 85 pour mettre en mouvement un système mécanique 94. Selon l'exemple représenté, l'installation motrice 80 peut être agencée au sein d'un giravion 99, et le système mécanique 94 peut être un rotor comprenant une pluralité de pales pour agir sur le déplacement du giravion 99. Un tel rotor peut par exemple assurer au moins partiellement la sustentation et/ou la propulsion du giravion 99.

Par ailleurs, la référence 85 désigne n'importe quel moteur, les références 86, 87 désignant des moteurs particuliers si besoin.

Indépendamment de ces aspects, l'installation motrice 80 comporte au moins un boîtier instrumenté 10 pour transmettre une puissance motrice générée par un moteur 85, et éventuellement un boîtier instrumenté 10 par moteur 85 en présence de plusieurs moteurs 85.

Selon l'exemple illustré, l'installation motrice 80 comporte au moins deux moteurs 86, 87 pouvant transmettre une puissance motrice respectivement aux deux parties menantes 31 de deux boîtiers instrumentés 10. Les deux moteurs 85 sont éventuellement régulés, par des systèmes de régulation usuels non représentés pour ne pas alourdir la figure, pour fonctionner sur requête selon un mode de fonctionnement collaboratif ou un mode de fonctionnement asymétrique. Durant le mode de fonctionnement coopératif, les deux moteurs 86, 87 sont régulés pour développer chacun une puissance motrice. A l'inverse, durant le mode de fonctionnement asymétrique les deux moteurs 86, 87 sont régulés pour qu'au moins un moteur 86 soit actif en développant une puissance motrice et qu'au moins un moteur 87 soit en veille en ne transmettant pas une puissance motrice.

Selon un autre aspect, un boîtier instrumenté 10 selon l'invention peut être placé à diverses positions.

Selon la figure 2, un boîtier instrumenté 10 peut être connecté directement à un moteur 85 et à une liaison mécanique 95. Une telle liaison mécanique 95 peut comprendre des organes mobiles 951, 952, 953 logés dans une enveloppe 954, tels qu'un ou plusieurs arbres 951, 952, des connecteurs 953 autorisant des désalignements, des paliers, etc.

Ainsi, la partie menante 31 du boîtier instrumenté 10 est connectée à un premier organe mobile formé par un arbre moteur d'un moteur 85 de manière usuelle. De plus, la partie menée 35 du boîtier instrumenté 10 est connectée à un deuxième organe mobile de la liaison mécanique 95, ce deuxième organe mobile ou un élément mobile de la liaison mécanique 95 solidaire en rotation du deuxième organe mobile étant connecté à une boîte de transmission de puissance 90. Par exemple, la boîte de transmission de puissance 90 comporte une roue 91 connectée directement ou indirectement à la liaison mécanique, la roue 91 mettant en mouvement un ou plusieurs étages de réduction de vitesse 92 qui entraînent en rotation un mât 93 solidaire en rotation du rotor 94. En outre, le carter 20 d'un boîtier instrumenté 10 est fixé à l'enveloppe de la liaison mécanique et à une enveloppe du moteur 85 associés via la première interface de fixation 21 et la deuxième interface de fixation 22.

La figure 2 illustre un exemple deux boîtiers instrumentés 10 connectés chacun à un moteur 86, 87 et à une liaison mécanique 96, 97, les deux liaisons mécaniques 96, 97 engrenant une même roue 91.

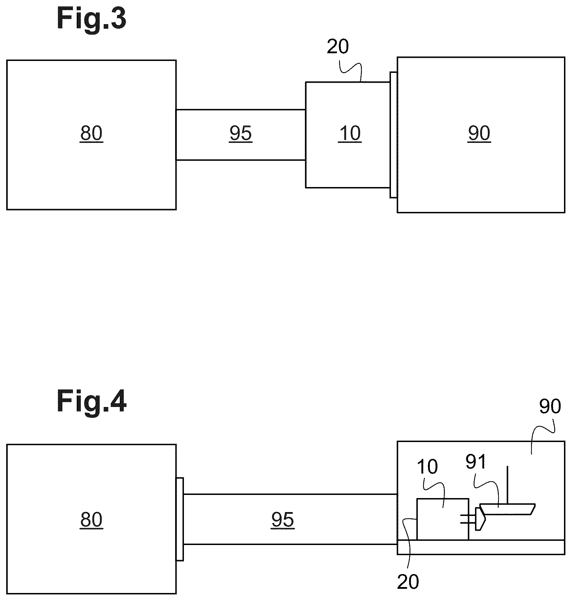

Selon la figure 3, un boîtier instrumenté 10 peut être connecté directement à une liaison mécanique 95 et à une boîte de transmission de puissance 90.

Ainsi, la partie menante 31 du boîtier instrumenté 10 est connectée à un premier organe mobile de la liaison mécanique 95 qui est solidaire en rotation d'un arbre moteur d'un moteur 85. De plus, la partie menée 35 du boîtier instrumenté 10 est connectée à un deuxième organe mobile formé par une entrée d'une boîte de transmission de puissance 90 et par exemple à la roue 91 décrite précédemment. En outre, le carter 20 d'un boîtier instrumenté 10 est fixé à l'enveloppe de la liaison mécanique et à une enveloppe de la boîte de transmission 90 via la première interface de fixation 21 et la deuxième interface de fixation 22.

Selon la figure 4, un boîtier instrumenté 10 peut être agencé de manière amovible dans une boîte de transmission de puissance 90.

Par exemple, un arbre moteur d'un moteur 85 est connecté à une liaison mécanique 95 qui est connectée à la boîte de transmission de puissance 90, le boîtier instrumenté 10 étant logé de manière amovible dans la boîte de transmission de puissance 90. Eventuellement, la partie menante 31 du boîtier instrumenté 10 est connectée à un premier organe mobile en rotation de la liaison mécanique 95, voire directement ou indirectement à la roue 91 précitée.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Boîtier instrumenté (10),
comprenant un carter (20) et une roue libre (30), la roue libre (30) comprenant une partie menante (31) et une partie menée (35) agencées au moins dans un volume interne (INT) délimité par ledit carter (20), ledit boîtier instrumenté (10) comprenant au moins un circuit de lubrification (40) lubrifiant ladite roue libre (30) dans le carter (20), ledit boîtier instrumenté (10) comprenant au moins un senseur (60) surveillant le fonctionnement de la roue libre (30).

2. Boîtier instrumenté selon la revendication 1,
dans lequel ledit circuit de lubrification (40) comprend au moins un premier connecteur (41) et un deuxième connecteur (42) solidaire du carter (20) pour permettre une entrée d'un fluide (46) dans le boîtier instrumenté (10) et une sortie du fluide (46) en dehors du boîtier instrumenté (10).

3. Boîtier instrumenté selon la revendication 2,
dans lequel ledit premier connecteur (41) et le deuxième connecteur (42) sont auto-obturants.

4. Boîtier instrumenté selon l'une quelconque des revendications 2 à 3,
dans lequel ledit circuit de lubrification (40) comporte une ligne de lubrification (43) ménagée dans le carter (20), la ligne de lubrification (43) étant en communication fluidique avec ledit au moins un premier connecteur (41).

5. Boîtier instrumenté selon l'une quelconque des revendications 1 à 4,
dans lequel ledit carter (20) comporte au moins un port endoscopique (50).

6. Boîtier instrumenté selon l'une quelconque des revendications 1 à 5,
dans lequel ledit carter (20) comporte une première interface de fixation (21) configurée pour être fixée à un premier dispositif ayant un premier organe connecté à la partie menante (31) et une deuxième interface de fixation (22) configurée pour être fixée à un deuxième dispositif ayant un deuxième organe connecté à la partie menée (35).

7. Boîtier instrumenté selon l'une quelconque des revendications 1 à 6,
dans lequel ladite partie menante (31) et ladite partie menée (35) s'étendent chacune partiellement en dehors du carter (20).

8. Boîtier instrumenté selon l'une quelconque des revendications 1 à 7,
dans lequel ledit boîtier instrumenté (10) comporte au moins un palier (71, 72) dans ledit volume interne (INT) entre le carter (20) et la partie menante (31) ou la partie menée (35).

9. Boîtier instrumenté selon l'une quelconque des revendications 1 à 8,
dans lequel ledit au moins un senseur (60) comporte un ou plusieurs des senseurs suivants : un accéléromètre (61) agencé sur le carter (20), un senseur de température (62) agencé sur le carter (20), un senseur de pression (63) mesurant une pression d'un fluide au sein du circuit de lubrification (40), un senseur de température (64) mesurant une température du fluide au sein du circuit de lubrification (40), un bouchon magnétique (66) agencé sur le carter (20), un interrupteur thermique (65).

10. Boîtier instrumenté selon l'une quelconque des revendications 1 à 9,
dans lequel ledit au moins un senseur (60) comporte au moins un accéléromètre (61) agencé sur le carter (20), et au moins un senseur de température (62) agencé sur le carter (20), et au moins un senseur de pression (63) mesurant une pression d'un fluide au sein du circuit de lubrification (40), et au moins un senseur de température (64) mesurant une température du fluide au sein du circuit de lubrification (40), et au moins un bouchon magnétique (66) agencé sur le carter (20), et au moins un interrupteur thermique (65).

11. Installation motrice (80) comprenant au moins un moteur (85) pour mettre en mouvement un système mécanique (94),
**caractérisée en ce que** ladite installation motrice (80) comporte au moins un boîtier instrumenté (10) selon l'une quelconque des revendications 1 à 10 pour transmettre une puissance générée par ledit au moins un moteur.

12. Installation motrice selon la revendication 11,
dans laquelle :
- ladite partie menante (31) du boîtier instrumenté (10) est connectée à un arbre moteur dudit au moins un moteur (85) et ladite partie menée (35) du boîtier instrumenté (10) est connectée à une liaison mécanique (95) qui est connectée à une boîte de transmission de puissance (90), ou
- ladite partie menante (31) du boîtier instrumenté (10) est connectée à une liaison mécanique (95) qui est connectée à un arbre moteur dudit au moins un moteur (85) et ladite partie menée (35) du boîtier instrumenté (10) est connectée à une entrée d'une boîte de transmission de puissance (90), ou
- un arbre moteur dudit au moins un moteur (85) est connecté à une liaison mécanique (95) qui est connectée à une boîte de transmission de puissance (90), ledit boîtier instrumenté (10) étant logé de manière amovible dans la boîte de transmission de puissance (90).

13. Installation motrice selon l'une quelconque des revendications 11 à 12,
**caractérisée en ce que** ladite installation motrice (80) comprend au moins deux moteurs (85) et un dit boîtier instrumenté (10) par moteur (85), les au moins deux moteurs (85) étant configurés pour fonctionner sur requête selon un mode de fonctionnement collaboratif durant lequel les deux moteurs (85) développent chacun une puissance motrice et un mode de fonctionnement asymétrique durant lequel au moins un moteur est actif en développant une puissance motrice et au moins un moteur est en veille en ne transmettant pas une puissance motrice.

14. Giravion (99) comprenant une installation motrice (80) comportant au moins un moteur (85) pour mettre en mouvement un rotor (94),
**caractérisé en ce que** ladite installation motrice (80) est selon l'une quelconque des revendications 11 à 13.
